# EUROPEAN PATENT APPLICATION

(11) **EP 1 154 286 A1**
(43) Date of publication of application: **14.11.2001**
(21) Application number: 00303999.7
(22) Date of filing: 12.05.2000
(51) Int. Cl.: G01V 3/26, G01V 3/08, E21B 47/01, E21B 10/44

(54) **Method and apparatus for detecting buried metallic objects**

(71) Applicant: Royal Ordnance plc, Euxton Chorley Lancashire PR7 6AD (GB)
(72) Inventor: The designation of the inventor has not yet been filed
(74) Representative: Wildman, David Brian

(57) **Abstract**

In the method of detecting buried ordnance, a magnetometer (16) is housed within an auger at least the leading portion (10) of which is made from a non-ferrous material such as titanium. Since no significant ferrous components are within the normal detection range of the magnetometer, measurements may be performed as the auger is driven into the soil, leading to benefits in terms of safety and efficiency. Time and expense is also reduced because it is no longer necessary to remove drilling apparatus from the soil before performing magnetic field gradient measurements.

## Description

This invention relates to a method and apparatus for detecting buried metallic objects such as buried ordnance.

The search for ordnance buried at depth within soils is currently conducted by drilling a borehole, extracting the drilling tool, lowering a magnetometer into the borehole and taking readings for detecting metallic ferrous objects in the surrounding soil. The underground magnetic field profile can be looked upon as the magnitude of the magnetic field vector of the earth, independent of its direction, with superimposed disturbances due to buried ferrous objects such as unexploded bombs and shells which locally add or reduce the amplitude of the earth's magnetic field. These local disturbances are manifested as anomalies in output data obtained from the magnetometer.

Known caesium-vapour borehole magnetometers are capable of high accuracy and high magnetic field gradient tolerance and are, therefore, the instrument of choice for underground detection, especially in urban areas and made ground (i.e. infilled areas of ground formed for example from waste, refuse or re-used soils).

While down-hole investigations of this kind have the advantage of providing a required penetration depth substantially regardless of ground conditions, they can be expensive and time consuming. It is an object of this invention to reduce these limitations.

According to a first aspect of this invention a method of detecting buried metallic objects by monitoring signals from a magnetometer located underground comprises driving into the ground a shaft having a hollow non-ferrous portion, the interior of which is of sufficient size to receive the magnetometer, and monitoring the signals from the magnetometer while it is located inside the hollow shaft portion. Since the magnetometer can be located within the hollow non-ferrous portion of the shaft, it can be operated to provide magnetic field measurements with the shaft in-situ in the borehole, thereby avoiding the need to remove the shaft each time a measurement is required. This is particularly advantageous where ground conditions are such that the borehole formed by the shaft has to be re-formed after each magnetometer measurement.

Preferably, the magnetometer is located inside a leading non-ferrous portion of the shaft whilst the shaft is being driven into the ground, and is operated to provide magnetic field data at frequent intervals or continuously so that objects of interest can be detected as the shaft advances, providing safety and efficiency benefits.

According to a second aspect of the invention, apparatus for detecting buried metallic objects comprises the combination of a magnetometer and a hollow shaft shaped to be driven into the ground, at least a portion of the shaft being formed substantially entirely of non-ferrous material and having an interior space of sufficient size to receive the magnetometer. Typically, the magnetometer takes the form of an elongate cylinder having an outer diameter in the region of 50 to 100 mms, and the leading portion of the shaft comprises a titanium tubular casing with an inner diameter slightly greater than the outer diameter of the magnetometer so that the casing is a close fit around the magnetometer but has sufficient clearance to allow longitudinal and/or rotational relative movement.

Not all non-ferrous metals are suitable as materials for the hollow non-ferrous leading portion of the shaft.
For example, aluminium has been used, but the radio frequency of the emitters used for the magnetometers generate eddy currents of radio frequency within the aluminium which in turn affects the response of the magnetometer, reducing signal penetration to between about 0.5 and about 1.0m radius.

Trials have, however identified the following materials as suitable and effective for this purpose:-
- Silicon aluminium bronze, which is harder than aluminium, but as workable, and less affected by radio frequency eddies.
- Beryllium copper alloys, which are as hard as steel and have an extremely low magnetic permeability.
- Titanium and titanium alloys, which are extremely hard, although difficult to work.

The shaft is preferably formed as a non-ferrous drilling bit or auger comprising a non-ferrous tubular casing with a helical non-ferrous screw rail encircling the casing and terminating at the leading end of the auger with one or more non-ferrous cutting edges. This is driven into the soil by rotation using a conventional rotary clamp above ground level.

It will be understood that, whether or not the shaft is in the form of an auger and depending on the required depth of penetration, it is not necessary for the whole of the shaft to be made of non-ferrous material. In portions of the shaft sufficiently remote from the magnetometer, a conventional material such as steel may be used. As a guide, at least the leading 2 metres, and preferably 3 metres, of the shaft should be made of a non-ferrous material.

The shaft preferably comprises a plurality of elongate tubular sections which can be assembled in sufficient numbers to reach the required depth. Accordingly, drilling may be performed in a series of steps, a fresh section being added above ground level between each step. Normally, the magnetometer, together with a cable attaching it to an associated signal monitoring unit, is removed and replaced whenever a fresh section is attached.

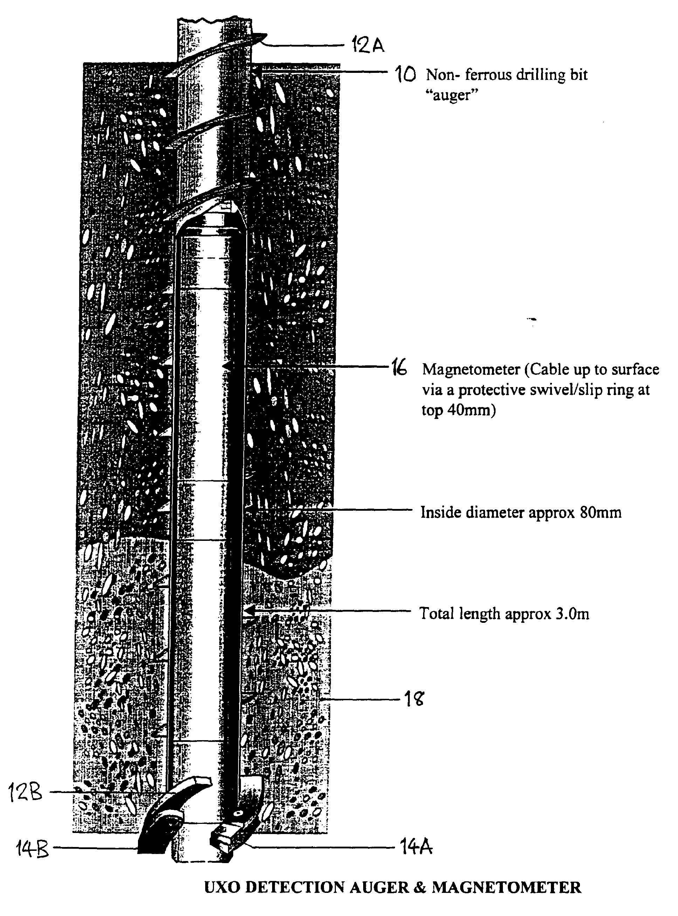

The invention will now be described by way of example with reference to the drawing which is a cut-away side view of part of an auger and magnetometer in use below ground in accordance with the invention.

Referring to the drawing, the distal end portion or leading portion (10) of an auger for use in accordance with the present invention comprises a tubular titanium casing with an inside diameter of approximately 80mms carrying on its outer surface a helical titanium blade (12A) which extends over the entire length of the leading auger portion (10) and terminates at the distal end in a replaceable cutting bit (14A). In this example, a second cutting bit (14B) is attached to the distal end of a second helical blade (12B), of which only the end portion is shown in the drawing.

Housed within the leading auger portion (10) is an elongate cylindrical caesium-vapour magnetometer (16) having an outside diameter somewhat less than 80mm so that the auger can rotate about the magnetometer. The magnetometer (16) is attached to a monitoring unit at ground level via a cable which passes through the interior of the auger and emerges at the auger proximal end where it is surrounded by a protective bush which can be attached to the uppermost section of the auger whilst drilling is in progress. The monitoring unit, the cable, and the protective bush are not shown in the drawing.

The drawing shows only the leading portion (10) of the auger. When the auger is driven beyond a predetermined depth, additional tubular auger sections are added one at a time in a conventional manner, drilling progressing in a series of steps. Each time a new auger section is required, the magnetometer and its cable are removed from the auger and then threaded back through the new section so that drilling can continue with the output signals from the magnetometer being monitored throughout the drilling process. Alternatively the cable can be designed with connecting elements which can be separated so that additional auger sections can be added without the need for removal of the magnetometer on each occasion, and further sections of cable can be added through suitable connections.
The leading auger portion (10) may, itself, be formed of a plurality of titanium sections, typically to a length of about 3 metres. Auger sections proximal of the leading portion are made of a different material, in this case.

It will be understood that making the leading auger portion (10) from non-ferrous material allows magnetic gradient measurements to be performed while the borehole is being advanced through the soil (18), with the result that potentially dangerous buried ordnance can be detected before it is reached by the auger. It follows that drilling can proceed not only more safely, but more efficiently. Particular improvements in efficiency are achieved, in addition, by performing downhole measurements without having to remove the auger.

## Claims

1. A method of detecting buried metallic objects by monitoring signals from a magnetometer located underground, wherein the method comprises driving into the ground a shaft having a hollow non-ferrous metallic portion, the interior of which is of sufficient size to receive the magnetometer, and monitoring the signals from the magnetometer while it is located inside the hollow shaft portion.

2. A method according to claim 1, wherein the shaft is driven into the ground with the magnetometer located inside the hollow shaft portion, and the signals from the magnetometer are monitored whilst the shaft is being driven into the ground.

3. A method according to claim 2 or claim 3, wherein the shaft comprises a plurality of detachable hollow shaft sections and is driven into the ground in a series of steps, fresh shaft sections being added between driving steps according to the required depth of penetration underground, and wherein at least the leading section is made of non-ferrous material.

4. A method according to claim 4, wherein the magnetometer is provided with a cable for carrying the magnetometer signals to an above-ground signal monitoring unit, the cable passing through the hollow shaft sections, and wherein the magnetometer and cable are removed from the shaft each time a fresh shaft section is added, and the shaft is an auger which is rotated to drive it into the ground.

5. A method according to claim 4, wherein:
the auger houses a cable connecting the magnetometer to an above-ground signal monitoring unit,
the auger rotates relative to the magnetometer, and
the cable is protected at an upper end of the auger by a bush located around the cable, the cable being slidable within the bush.

6. A method of detecting buried ordnance, the method being as claimed in any of claims 1 to 5.

7. Apparatus for detecting buried metallic objects comprising the combination of a magnetometer and a hollow shaft shaped to be driven into the ground, at least a portion of the shaft being formed substantially entirely of non-ferrous metallic material and having an interior space of sufficient size to receive the magnetometer, and at least a leading portion of the shaft comprises a non-ferrous tubular casing.

8. Apparatus according to claim 7, wherein the magnetometer is an elongate cylinder and the shaft leading portion has a cylindrical interior space, the outer diameter of the magnetometer and the inner diameter of the casing being such that the casing is a close fit around the magnetometer but with sufficient clearance to allow longitudinal and/or rotational relative movement.

9. Apparatus according to claim 10 or claim 11, wherein the shaft comprises a plurality of elongate tubular sections which can be assembled to form a shaft of variable length according to the required depth of penetration underground, and the shaft comprises an auger.

10. Apparatus according to claim 9, wherein the auger includes a non-ferrous metallic helical screw member extending around an elongate non-ferrous metallic casing, for example titanium, a titanium alloy, a silicon aluminium bronze, or a beryllium copper alloy.
